# EUROPÄISCHE PATENTSCHRIFT

(11) **EP 2 978 948 B1**
(45) Veröffentlichungstag und Bekanntmachung des Hinweises auf die Patenterteilung: **10.05.2017**
(21) Anmeldenummer: 14711247.8
(22) Anmeldetag: 19.03.2014
(51) Int. Cl.: F02B 29/04, F02M 35/10, F02M 35/104

(54) **SAUGMODUL FÜR EINE AUFGELADENE BRENNKRAFTMASCHINE**
INTAKE MODULE FOR A SUPERCHARGED INTERNAL COMBUSTION ENGINE
MODULE D'ASPIRATION DESTINÉ À UN MOTEUR À COMBUSTION INTERNE SURALIMENTÉ

(30) Priorität: 26.03.2013 DE 102013205318
(43) Veröffentlichungstag der Anmeldung: 03.02.2016
(73) Patentinhaber: Mahle International GmbH, 70376 Stuttgart (DE)
(72) Erfinder: DINGELSTADT, René, 70374 Stuttgart (DE); STEHLIG, Juergen, 72654 Neckartenzlingen (DE); MILLER, James, Northampton Northamptonshire NN155M (GB); TAYLOR, James, Northampton Northamptonshire NN4 6AP (GB); MÜLLER, Rolf, 71711 Steinheim/Murr (DE)
(74) Vertreter: BRP Renaud & Partner mbB Rechtsanwälte Patentanwälte Steuerberater
(86) Internationale Anmeldenummer: PCT/EP2014/055476
(87) Internationale Veröffentlichungsnummer: WO 2014/154540

(56) Entgegenhaltungen:
- EP-A2- 1 329 610
- EP-A2- 1 911 946
- WO-A1-2012/080508
- DE-A1- 10 254 016
- DE-A1-102008 047 079

## Beschreibung

Die vorliegende Erfindung betrifft eine aufgeladene Brennkraftmaschine, insbesondere in einem Kraftfahrzeug, mit den Merkmalen des Oberbegriffs des Anspruchs 1. Die Erfindung betrifft außerdem ein Saugmodul für eine derartige aufgeladene Brennkraftmaschine.

Aus der DE 36 20 754 A1 ist eine gattungsgemäße aufgeladene Brennkraftmaschine bekannt, die eine Frischluftanlage zum Zuführen von Frischluft zu Brennräumen der Brennkraftmaschine aufweist, wobei in der Frischluftanlage eine Ladeeinrichtung, nämlich ein Verdichter eines Abgasturboladers, angeordnet ist. Die Brennkraftmaschine ist ferner mit einer zweistufigen Ladeluftkühlung ausgestattet, mit deren Hilfe die aufgeladene Frischluft, also die Ladeluft, stromab der Ladeeinrichtung gekühlt werden kann. Die Frischluftanlage umfasst ein an die Brennkraftmaschine angeschlossenes und die Frischluft auf die Brennräume verteilendes Saugmodul sowie eine Ladeluftleitung, die von der Ladeeinrichtung zum Saugmodul führt. Eine erste Kühlstufe der Ladeluftkühlung ist durch einen Kühler gebildet. Eine zweite Kühlstufe der Ladeluftkühlung ist durch einen Verdampfer eines Kältekreises gebildet, in dem ein Kältemittel zirkuliert. Bei der bekannten Brennkraftmaschine sind der Kühler und der Verdampfer in der Ladeluftleitung in Reihe angeordnet. Der Kühler ist direkt mit einem Kühlluftstrom beaufschlagbar.

Aus der DE 102 54 016 A1 ist eine weitere aufgeladene Brennkraftmaschine mit zweistufiger Ladeluftkühlung bekannt, wobei auch hier ein Verdampfer und ein Kühler in Reihe in eine Ladeluftleitung eingebunden sind. In diesem Fall ist jedoch der Kühler in einen Kühlkreis eingebunden, in dem ein Kühlmittel zirkuliert, und der einen mit einem Kühlluftstrom beaufschlagbaren weiteren Kühler enthält.

Eine weitere aufgeladene Brennkraftmaschine mit zweistufiger Ladeluftkühlung ist aus der DE 10 2008 028 290 A1 bekannt.

Eine zweistufige Ladeluftkühlung benötigt vergleichsweise viel Bauraum, der in einem Motorraum häufig nicht zur Verfügung steht. Im Hinblick auf den Wunsch, Straßenfahrzeuge leichter und somit kleiner zu bauen, besteht der Wunsch, eine aufgeladene Brennkraftmaschine mit mehrstufiger Ladeluftkühlung möglichst kompakt bauen zu können.

Die vorliegende Erfindung beschäftigt sich mit dem Problem, für eine Brennkraftmaschine der eingangs genannten Art eine verbesserte Ausführungsform anzugeben, die sich insbesondere durch eine kompakte Bauform auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Verdampfer des Kältekreises im Saugmodul unterzubringen. Hierdurch kann ein im Saugmodul zum Verteilen der aufgeladenen Frischluft auf die einzelnen Brennräume vorhandener Innenraum oder Verteilerraum zur Unterbringung des Verdampfers genutzt werden, wodurch die Frischluftanlage mit zugehöriger Ladeluftkühlung vergleichsweise kompakt realisierbar ist. Des Weiteren hat sich gezeigt, dass die Unterbringung des Verdampfers im Saugmodul zu einer besonders effizienten Kühlung der Ladeluft, also der aufgeladenen Frischluft, führt, da sie unmittelbar stromauf der Brennräume erfolgt und die Möglichkeit einer erneuten Erwärmung, z.B. durch die warme Umgebung, reduziert ist.

Der Verdampfer ist in einen Kältekreis eingebunden, in dem in üblicher Weise ein Kältemittel zum Wärmetransport von einem Verdampfer zu einem Kondensator erfolgt, wobei das Kältemittel im Verdampfer verdampft wird und im Kondensator kondensiert wird. Zum Antreiben des Kältemittels und zum Komprimieren des Kältemittels ist im Kältekreis üblicherweise zwischen dem Verdampfer und dem Kondensator ein Kältemittelkompressor angeordnet. Ein derartiger Kältekreis kann bei einer Fahrzeuganwendung separat zu einem im Fahrzeug regelmäßig vorhandenen Kältekreis einer Klimaanlage vorgesehen sein. Ebenso ist es möglich, den Verdampfer der zweiten Kühlstufe in einen Zweig des Kältekreises einer derartigen Klimaanlage des Fahrzeugs einzubinden.

Entsprechend einer vorteilhaften Ausführungsform kann der Kühler an der ersten Kühlstufe stromauf des Verdampfers in der Frischluftanlage angeordnet sein. Somit wird die aufgeladene Frischluft zuerst im Kühler und anschließend im Verdampfer gekühlt. Insbesondere lässt sich durch diese Maßnahme der Kühler auf einem höheren Temperaturniveau betreiben als der Verdampfer.

Bei einer anderen vorteilhaften Ausführungsform kann der Kühler der ersten Kühlstufe in einen Kühlkreis eingebunden sein, in dem ein Kühlmittel zirkuliert. Im Unterschied zu einem Kältekreis bleibt das Kühlmittel im Kühlkreis in der Regel flüssig. Innerhalb eines solchen Kühlkreises wird Wärme vom Kühler der ersten Kühlstufe auf einen weiteren Kühler des Kühlkreises übertragen, der mit einem Kühlluftstrom beaufschlagbar ist. Beim Kühlkreis, in den der Kühler der ersten Kühlstufe eingebunden ist, kann es sich um einen separaten Kühlkreis handeln. Ebenso kann es sich hierbei um einen Zweig eines ohnehin an der Brennkraftmaschine bzw. im Fahrzeug vorhandenen Kühlkreises handeln. Beispielsweise kann es sich um einen Zweig eines Motorkühlkreises handeln, der mit einem Motorblock der Brennkraftmaschine wärmeübertragend gekoppelt ist. In der Regel fließt bei einem Motorkühlkreis das Kühlmittel unmittelbar durch den Motorblock.

Entsprechend einer vorteilhaften Weiterbildung kann der Kühler der ersten Kühlstufe im Saugmodul angeordnet sein. In diesem Fall sind sowohl der Verdampfer als auch der Kühler im Saugmodul angeordnet, wodurch eine besonders kompakte Bauform realisierbar ist. Auch hier ist der Kühler zweckmäßig stromauf des Verdampfers angeordnet.

Bei einer anderen Weiterbildung kann der Kühler der ersten Kühlstufe ein Niedertemperaturkühler eines Niedertemperaturkühlkreises sein, in dem ein Niedertemperaturkühlmittel zirkuliert. Alternativ kann es sich beim Kühler der ersten Kühlstufe um einen Hochtemperaturkühler eines Hochtemperaturkühlkreises handeln, in dem ein Hochtemperaturkühlmittel zirkuliert. Hierdurch ist es möglich, die einzelnen Kühlstufen effizient aufeinander abzustimmen, um bei möglichst geringem Energieverbrauch eine wirksame Kühlung realisieren zu können.

Entsprechend einer anderen vorteilhaften Ausführungsform kann der Kühler der ersten Kühlstufe ein Niedertemperaturkühler eines Niedertemperaturkühlkreises sein, in dem ein Niedertemperaturkühlmittel zirkuliert, während die Ladeluftkühlung eine dritte Kühlstufe aufweist, die durch einen Hochtemperaturkühler eines Hochtemperaturkühlkreises gebildet ist, in dem ein Hochtemperaturkühlmittel zirkuliert. Zweckmäßig ist in diesem Fall der Hochtemperaturkühler bezüglich des Frischluftstroms stromauf des Niedertemperaturkühlers angeordnet, der seinerseits stromauf des Verdampfers angeordnet ist. Mit Hilfe einer derartigen dreistufigen Ladeluftkühlung lässt sich die Ladeluft besonders effizient auf eine relativ niedrige Temperatur kühlen.

Entsprechend einer vorteilhaften Weiterbildung kann der Niedertemperaturkühler zusätzlich zum Verdampfer im Saugmodul angeordnet sein, während der Hochtemperaturkühler in der Ladeluftleitung angeordnet ist. Alternativ ist ebenso eine Ausführungsform denkbar, bei welcher der Niedertemperaturkühler und der Hochtemperaturkühler zusätzlich zum Verdampfer im Saugmodul angeordnet sind, wodurch sich eine extrem kompakte Bauform realisieren lässt.

Bei einer anderen Ausführungsform können der Kühler der ersten Kühlstufe oder ein weiterer Kühler einer weiteren Kühlstufe der Ladeluftkühlung unmittelbar mit einem Kühlluftstrom beaufschlagbar sein und hierzu in der Ladeluftleitung angeordnet sein. In diesem Fall erfolgt im Kühler der jeweiligen Kühlstufe eine unmittelbare Kühlung der Ladeluft mittels des Kühlluftstroms. Hierdurch arbeitet der Kühler der Ladeluftkühlung direkt, im Unterschied zu einer indirekten Kühlung der Ladeluft bei einem Kühler, der in einen Kühlkreis eingebunden ist, bei dem die Wärme über das Kühlmittel zu einem dem Kühlluftstrom direkt ausgesetzten Luftkühler gelangt.

Bei einer anderen vorteilhaften Ausführungsform kann die Ladeluftkühlung insgesamt vierstufig konzipiert sein, wobei die erste Kühlstufe durch einen Niedertemperaturkühler gebildet ist, die zweite Kühlstufe durch den Verdampfer gebildet ist, eine dritte Kühlstufe durch einen dem Niedertemperaturkühler vorgeschalteten Hochtemperaturkühler gebildet ist und eine vierte Kühlstufe durch den vorstehend genannten, unmittelbar mit dem Kühlluftstrom beaufschlagbaren direkt arbeitenden Kühler gebildet ist, der zumindest stromauf des Verdampfers im Frischluftstrom angeordnet ist. Der direkte Kühler der vierten Kühlstufe kann stromab des Niedertemperaturkühlers oder zwischen dem Hochtemperaturkühler und dem Niedertemperaturkühler oder stromauf des Hochtemperaturkühlers im Ladeluftstrom angeordnet sein.

Sofern nur drei Kühlstufen vorgesehen sind, kann der direkt mit einem Kühlluftstrom beaufschlagbare Kühler eine dritte Kühlstufe bilden. Dieser direkte Kühler befindet sich dann im Ladeluftstrom entweder stromauf des Kühlers der ersten Kühlstufe oder zwischen dem Kühler der ersten Kühlstufe und dem Verdampfer.

Wie erläutert ist für die hier vorgestellte kompakte Bauweise von Bedeutung, dass zumindest eine der Kühlstufen innerhalb des Saugmoduls realisiert wird. Bevorzugt handelt es sich hierbei um die zweite Kühlstufe, die mit dem Verdampfer arbeitet, so dass letztlich zumindest der Verdampfer im Saugmodul angeordnet ist. Zusätzlich kann jedoch auch der Kühler der ersten Kühlstufe im Saugmodul angeordnet sein. Alternativ befindet sich der Kühler der ersten Kühlstufe in der Ladeluftleitung. Sofern mehr als ein mit Kühlmittel beaufschlagbarer Kühler zum Kühlen der Ladeluft vorhanden sind, ist jeder Kühler, der nicht im Saugmodul angeordnet ist, in der Ladeluftleitung angeordnet.

Entsprechend einer anderen vorteilhaften Ausführungsform können der vorstehend genannte, mit einem Kühlluftstrom beaufschlagbare Kühler und ein Kondensator des Kältemittelkreises nacheinander mit dem Kühlluftstrom beaufschlagt werden, also so angeordnet sein, dass sie vom Kühlluftstrom nacheinander durchströmbar sind. Hierdurch wird auch im Bereich der Wärmeübertragung an den Luftstrom eine kompakte Bauform realisiert.

Entsprechend einer anderen vorteilhaften Ausführungsform kann der jeweilige Kühlkreis einen mit einem Kühlluftstrom beaufschlagbaren Luftkühler aufweisen, während der Kältekreis einen mit dem Kühlluftstrom beaufschlagbaren Kondensator besitzt. Auch in diesem Fall ist eine Ausführungsform zweckmäßig, bei welcher der jeweilige Luftkühler und der Kondensator im Kühlluftstrom in Reihe angeordnet sind, was in diesem Bereich ebenfalls zu einer kompakten Bauform führt.

Der jeweilige Kühlkreis kann dabei wieder ein Hochtemperaturkühlkreis oder ein Niedertemperaturkühlkreis sein. Sofern die Ladeluftkühlung mit zwei Kühlkreisen arbeitet, können auch zwei Luftkühler vorgesehen sein, die dann ebenfalls mit dem Kondensator im Kühlluftstrom in Reihe angeordnet sind, wobei der eine Luftkühler dann einem Hochtemperaturkühlkreis zugeordnet ist, während der andere Luftkühler dann einem Niedertemperaturkühlkreis zugeordnet ist.

Bei einer anderen vorteilhaften Ausführungsform kann das Saugmodul einen Gehäuseinnenraum an einer ersten Seite, einer zweiten Seite, einer dritten Seite, einer vierten Seite und an einer fünften Seite von insgesamt sechs Seiten begrenzen. Der in das Saugmodul eingebaute Verdampfer besitzt eine Stirnseite und ist im Gehäuseinnenraum so angeordnet, dass er mit seiner Stirnseite eine sechste Seite des Gehäuseinnenraums begrenzt. Hierdurch erhält der Verdampfer im Bereich seiner Stirnseite eine Zusatzfunktion, indem er einen den Gehäuseinnenraum begrenzenden Abschnitt des Gehäuses bildet. Besagte Stirnseite kann zweckmäßig Kältemittelanschlüsse des Verdampfers aufweisen.

Bei einer bevorzugten Weiterbildung kann das Saugmodul ein Gehäuse aufweisen, das den Gehäuseinnenraum an der ersten Seite, der zweiten Seite, der dritten Seite und der vierten Seite begrenzt. Ferner kann das Saugmodul einen Deckel aufweisen, der die fünfte Seite des Gehäuseinnenraums begrenzt, wenn er an das Gehäuse angebaut ist. Alternativ kann das Gehäuse auch so gestaltet sein, dass es auch die fünfte Seite umfasst. Ebenso ist auch eine andere Teilung des Gehäuses denkbar, z.B. in zwei Halbschalen.

Sofern im Saugmodul zusätzlich zum Verdampfer auch der Kühler der ersten Kühlstufe angeordnet ist, begrenzen der Verdampfer und der Kühler mit ihren beiden Stirnseiten die sechste Seite des Gehäuseinnenraums. Zweckmäßig kann auch die Stirnseite des Kühlers Kühlmittelanschlüsse aufweisen.

Entsprechend einer vorteilhaften Weiterbildung kann ein Ladeluftkanal integral an einem Gehäuse des Saugmoduls ausgeformt sein, der einen Ladelufteinlass des Gehäuses mit einem an der zweiten Seite des Gehäuseinnenraums ausgebildeten Einlassbereich des Gehäuseinnenraums fluidisch verbindet. Auch hierdurch wird eine kompakte Bauweise für die Frischluftanlage und letztlich für die Brennkraftmaschine unterstützt. Der Ladeluftkanal kann vorzugsweise an der ersten Seite des Gehäuseinnenraums am Gehäuse angeordnet sein.

Bei einer vorteilhaften Weiterbildung kann ein Auslassflansch des Saugmoduls integral an einem Gehäuse des Saugmoduls ausgeformt sein, der für wenigstens zwei Brennräume je einen fluidisch mit einem an der dritten Seite des Gehäuseinnenraums ausgebildeten Auslassbereich des Gehäuseinnenraums fluidisch verbundenen Auslasskanal enthält. Durch die Integration der Auslasskanäle in das Saugmodul lässt sich die Frischluftanlage preiswert und kompakt realisieren. Der Auslassflansch kann vorzugsweise an der dritten Seite des Gehäuseinnenraums am Gehäuse angeordnet sein.

Ein erfindungsgemäßes Saugmodul, das sich für eine Verwendung in einer Frischluftanlage zum Zuführen von Frischluft zu Brennräumen einer Brennkraftmaschine, insbesondere in einem Kraftfahrzeug, eignet, umschließt einen Gehäuseinnenraum, in dem ein Verdampfer eines Kältekreises und optional zumindest ein Kühler eines Kühlkreises bezüglich einer Ladeluftströmung in Reihe angeordnet sind, und begrenzt diesen an einer ersten Seite, einer zweiten Seite, einer dritten Seite, einer vierten Seite und einer fünften Seite von insgesamt sechs Seiten. Ferner ist eine Kältemittelanschlüsse aufweisende Verdampferstirnseite des Verdampfers so ausgestaltet, dass sie eine sechste Seite des Gehäuseinnenraums zumindest teilweise begrenzt. Sofern auch wenigstens ein Kühler im Gehäuseinnenraum angeordnet ist, kann auch eine Kühlmittelanschlüsse aufweisende Kühlerstirnseite des jeweiligen Kühlers einen anderen Teil der sechsten Seite des Gehäuseinnenraums begrenzen. Insgesamt können die Stirnseiten des Verdampfers und des jeweiligen Kühlers die sechste Seite des Gehäuseinnenraums gemeinsam begrenzen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1 bis 3: jeweils eine stark vereinfachte, schaltplanartige Prinzipdarstellung einer Brennkraftmaschine bei verschiedenen Ausführungsformen,
- Fig. 4: eine Draufsicht eines Saugmoduls bei entferntem Deckel,
- Fig. 5: eine auseinandergezogene, isometrisch Ansicht des Saugmoduls.

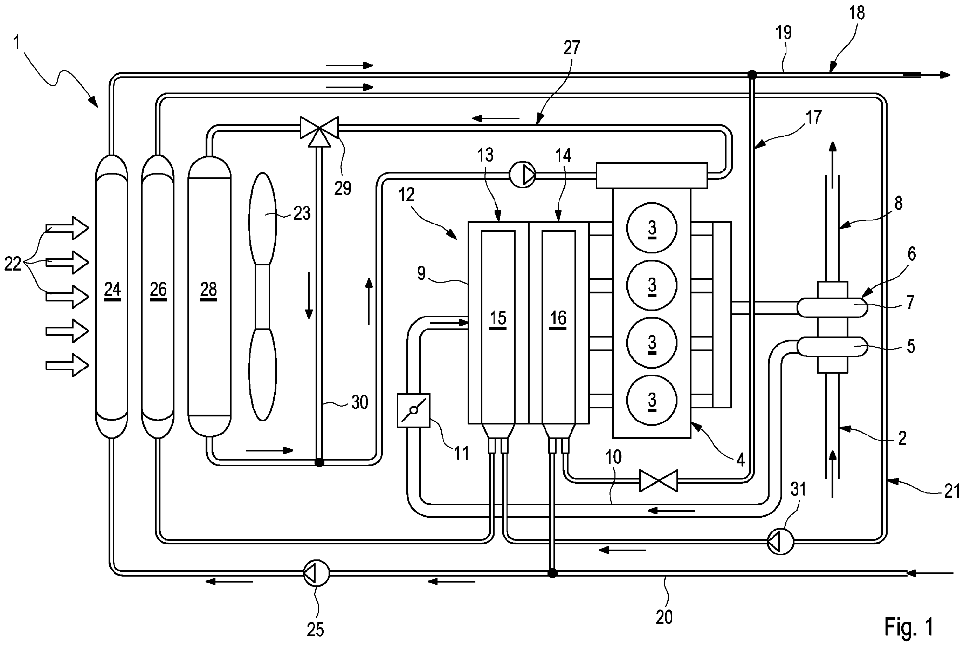

Entsprechend den Figuren 1 bis 3 umfasst eine aufgeladene Brennkraftmaschine 1, die sich für eine Verwendung in einem Kraftfahrzeug eignet, eine Frischluftanlage 2 zum Zuführen von Frischluft zu Brennräumen 3 der Brennkraftmaschine 1, die sich in einem Motorblock 4 der Brennkraftmaschine 1 befinden. In der Frischluftanlage 2 ist eine Ladeeinrichtung 5 angeordnet, die hier durch einen Verdichter eines Abgasturboladers 6 gebildet ist, dessen Turbine 7 in einer Abgasanlage 8 zum Abführen von Abgas von den Brennräumen 3 angeordnet ist. Die Frischluftanlage 2 umfasst ein Saugmodul 9, das an den Motorblock 4 angeschlossen ist und das die aufgeladene Frischluft, die im Folgenden auch als Ladeluft bezeichnet werden kann, auf die einzelnen Brennräume 3 verteilt. Die Frischluftanlage 2 umfasst ferner eine Ladeluftleitung 10, die von der Ladeeinrichtung 5 zum Saugmodul 9 führt und beispielsweise eine Drosseleinrichtung 11 enthalten kann.

Zum Kühlen der Ladeluft ist die Brennkraftmaschine 1 mit einer mehrstufigen Ladeluftkühlung 12 ausgestattet, die zumindest eine erste Kühlstufe 13 und eine zweite Kühlstufe 14 aufweist, die in der Frischluftanlage 2 in Reihe, also nacheinander von der Ladeluft durchströmbar, angeordnet sind. Die erste Kühlstufe 13 ist dabei durch einen Kühler 15 gebildet, während die zweite Kühlstufe 14 durch einen Verdampfer 16 eines Kältekreises 17 gebildet ist, in dem ein Kältemittel zirkuliert. Bei allen hier gezeigten Ausführungsformen ist der Verdampfer 16 im Saugmodul 9 angeordnet.

Der Kältekreis 17, in den der Verdampfer 16 eingebunden ist, ist hier durch einen Zweig eines Klimakältekreises 18 gebildet, der zu einer Klimatisierungseinrichtung des mit der Brennkraftmaschine 1 ausgestatteten Fahrzeugs gehört. Beispielsweise führt ein Vorlauf 19 des Klimakältekreises 18 zu einem hier nicht gezeigten Klimaverdampfer, mit dessen Hilfe ein einem Fahrzeuginnenraum zuzuführender Klimatisierungsluftstrom gekühlt werden kann. Ein Rücklauf 20 des Klimakältekreises 18 führt dann vom Klimaverdampfer zurück.

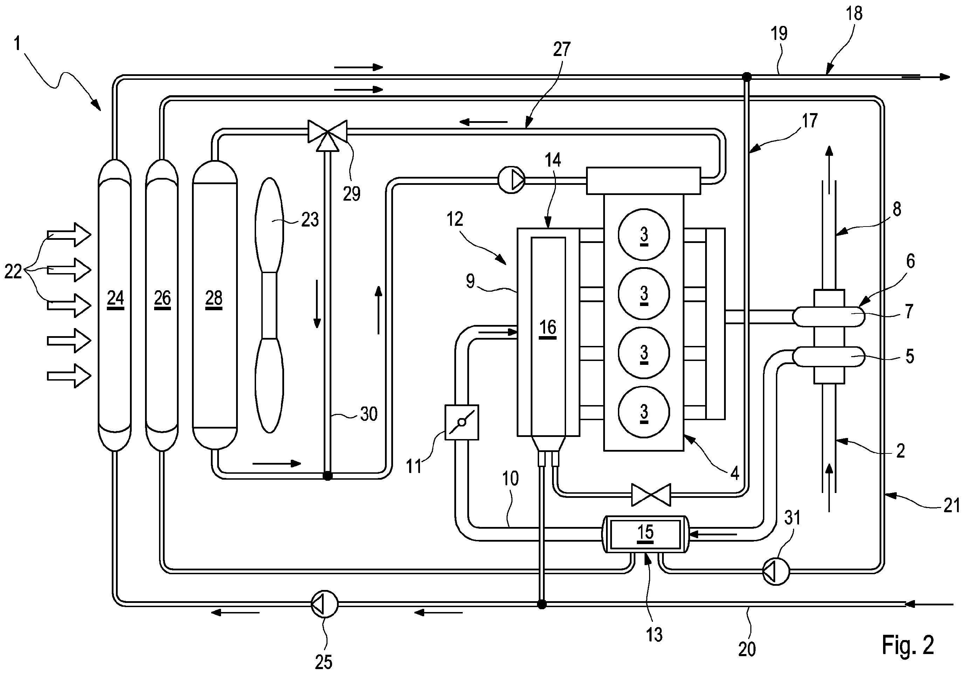

Der Kühler 15 der ersten Kühlstufe 13 ist in der Frischluftanlage 2 stromauf des Verdampfers 16 angeordnet. Bei den Ausführungsformen der Figuren 1 und 2 ist der Kühler 15 der ersten Kühlstufe 13 in einen Kühlkreis 21 eingebunden, in dem ein Kühlmittel zirkuliert, so dass der Kühler 15 eine indirekte Kühlung der Ladeluft bewirkt.

Bei der in Fig. 1 gezeigten Ausführungsform ist der Kühler 15 der ersten Kühlstufe 13 zusätzlich zum Verdampfer 16 im Saugmodul 9 angeordnet. Auch hier ist der Kühler 15 stromauf des Verdampfers 16 positioniert, so dass er von der Ladeluft zuerst durchströmt wird.

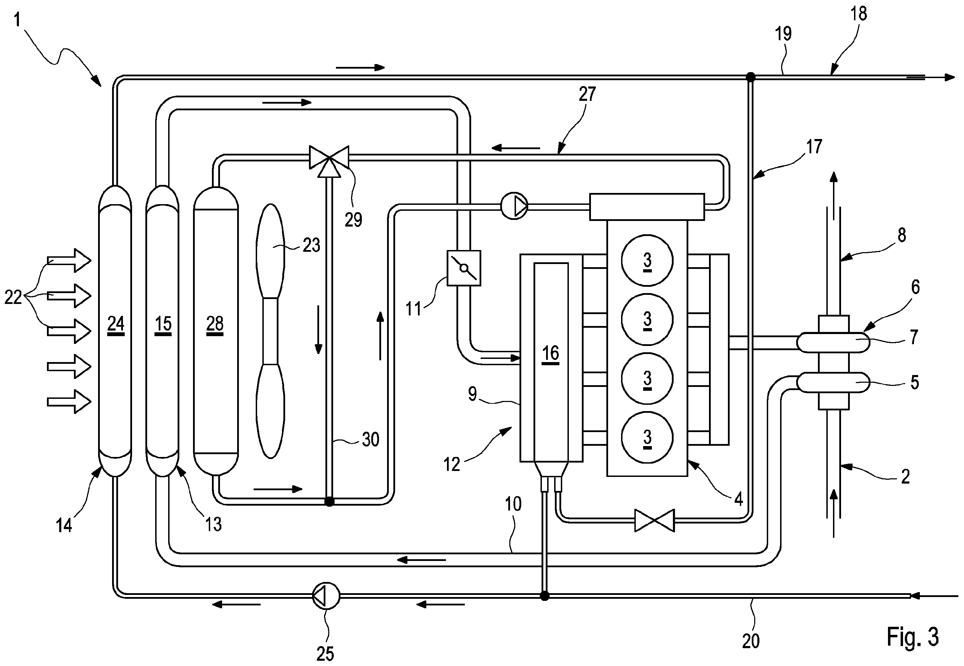

Im Unterschied dazu zeigen die Figuren 2 und 3 Ausführungsformen, bei denen der Kühler 15 der ersten Kühlstufe 13 in der Ladeluftleitung 10 angeordnet ist, also stromauf des Saugmoduls 9.

Während bei den Ausführungsformen der Figuren 1 und 2 der Kühler 15 der ersten Kühlstufe 13 eine indirekte Kühlung der Ladeluft bewirkt, nämlich über das im jeweiligen Kühlkreis 21 zirkulierende Kühlmittel, zeigt Fig. 3 eine Ausführungsform, bei welcher der Kühler 15 der ersten Kühlstufe 13 eine direkte Kühlung der Ladeluft bewirkt. In diesem Fall ist der Kühler 15 unmittelbar einem Kühlluftstrom 22 ausgesetzt, der in den Figuren 1 bis 3 durch mehrere Pfeile angedeutet ist. Der Kühlluftstrom 22 kann beispielsweise mit Hilfe eines Gebläses 23 erzeugt oder verstärkt werden. Ferner kann der Kühlluftstrom 22 bei einem Fahrzeug im Fahrbetrieb durch den Fahrtwind generiert werden. Der Kühlkreis 21 enthält außerdem eine Kühlmittelpumpe 31 zum Antreiben des Kühlmittels im Kühlkreis 21. Der Kältekreis 17 enthält außerdem einen Kondensator 24 zum Kondensieren des im Verdampfer 16 verdampften Kältemittels, um die Wärme der Ladeluft auf den Kühlluftstrom 22 zu übertragen. Der Kältekreis 17 enthält außerdem einen Kältekompressor 25 zum Antreiben des Kältemittels im Kältekreis 17. Zweckmäßig sind nun der Kondensator 24 und der gemäß Fig. 3 direkt kühlende Kühler 15 der ersten Kühlstufe 13 in Reihe im Kühlluftstrom 22 angeordnet.

Sofern der Kühler 15 der ersten Kühlstufe 13 gemäß den Figuren 1 und 2 indirekt kühlt, enthält der zugehörige Kühlkreis 21 außerdem einen Luftkühler 26, der ebenfalls mit dem Kühlluftstrom 22 beaufschlagbar ist. Zweckmäßig sind auch hier der Kondensator 24 und der Luftkühler 26 in Reihe angeordnet.

Die Brennkraftmaschine 1 kann außerdem mit einem Motorkühlkreis 27 ausgestattet sein, in dem ebenfalls ein Kühlmittel zirkuliert und der zur Kühlung des Motorblocks 4 dient. Der Motorkühlkreis 27 enthält einen mit dem Kühlluftstrom 22 beaufschlagbaren Motorkühler 28, der ebenfalls mit dem Kondensator 24 und dem Luftkühler 26 gemäß den Figuren 1 und 2 bzw. mit dem Kühler 15 gemäß Fig. 3 in Reihe angeordnet ist. Der Motorkühlkreis 27 enthält in üblicher Weise ein Thermostatventil 29 und einen den Motorkühler 28 umgehenden Bypass 30.

Obwohl in den Figuren 1 bis 3 nur Ausführungsformen mit einer zweistufigen Ladeluftkühlung 12 wiedergegeben sind, ist grundsätzlich auch eine dreistufige oder vierstufige Ladeluftkühlung 12 denkbar. Beispielsweise können ein Niedertemperaturkühlkreis und ein Hochtemperaturkühlkreis vorgesehen sein, die einen Niedertemperaturkühler und einen Hochtemperaturkühler enthalten, die in Reihe von der Ladeluft durchströmbar sind und beispielsweise stromauf des Verdampfers 16 angeordnet sind. Hinzu kann noch ein direkt arbeitender Kühler als vierte Kühlstufe kommen.

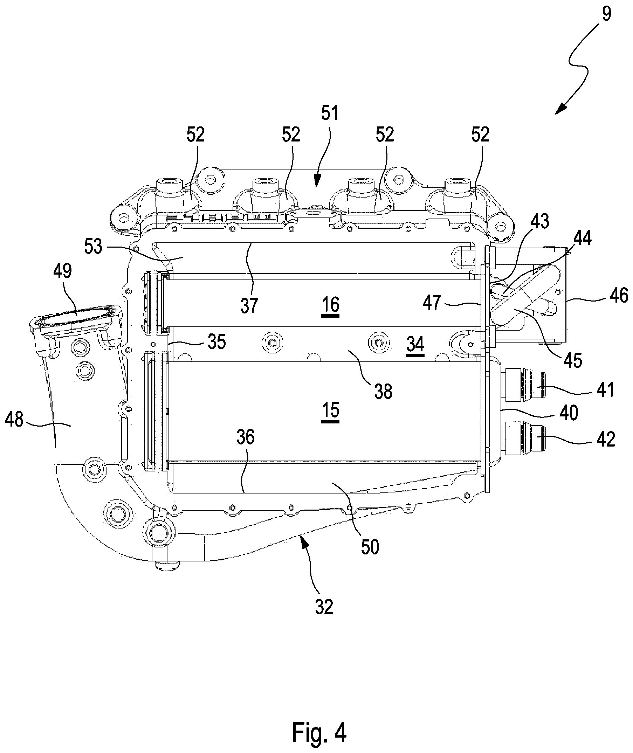

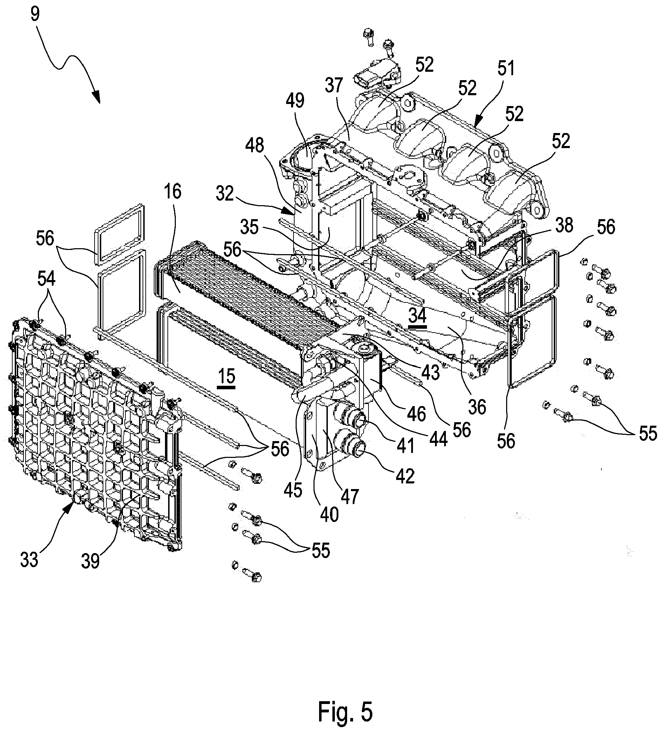

Entsprechend den Figuren 4 und 5 kann gemäß einer bevorzugten Ausführungsform, wie sie auch in Fig. 1 wiedergegeben ist, das Saugmodul 9 sowohl den Verdampfer 16 als auch den Kühler 15 enthalten. Die nachfolgenden Ausführungen betreffen diese spezielle Ausführungsform. Bei einer anderen Ausführungsform kann entsprechend vorgesehen sein, im Saugmodul 9 gemäß den Figuren 2 und 3 nur den Verdampfer 16 anzuordnen. Die nachfolgenden Ausführungen sind dann analog zu verstehen.

Entsprechend den Figuren 4 und 5 umfasst das Saugmodul 9 ein Gehäuse 32 und einen nur in Fig. 5 wiedergegeben Deckel 33 zum Verschließen des Gehäuses 32. In Fig. 4 ist der Deckel 33 weggelassen, um einen Einblick in einen Gehäuseinnenraum 34 des Saugmoduls 9 zu erhalten. Bei einer alternativen Ausführungsform kann das Gehäuse 32 auch einteilig ausgestaltet sein, so dass der Deckel 33 quasi in das Gehäuse 32 integriert ist. Ebenso ist eine Schalenbauweise für dads Gehäuse 32 denkbar.

Das Gehäuse 32 begrenzt den Gehäuseinnenraum 34 an einer ersten Seite 35, an einer zweiten Seite 36, an einer dritten Seite 37 und an einer vierten Seite 38 von insgesamt sechs Seiten, die sich bei einem quaderförmigen Saugmodul 9, insbesondere in Verbindung mit einem kartesischen Koordinatensystem, ergeben. Der Deckel 33 begrenzt eine fünfte Seite 39 des Gehäuseinnenraums 34, wenn er an das Gehäuse 32 angebaut ist.

Der Kühler 15 besitzt eine Kühlerstirnseite 40, an der Kühlmittelanschlüsse, nämlich ein Kühlmitteleinlass 41 und ein Kühlmittelauslass 42 angeordnet sind. Der Verdampfer 16 besitzt eine Verdampferstirnseite 43, an der Kältemittelanschlüsse, nämlich ein Kältemitteleinlass 44 und ein Kältemittelauslass 45, angeordnet sind. Beim hier gezeigten Beispiel ist an der Verdampferstirnseite 43 außerdem ein Expansionsventil 46 angeordnet, mit dessen Hilfe der Druck im Kältemittel gesteuert werden kann.

Der Kühler 15 und der Verdampfer 16 können nun im Gehäuse 32 so angeordnet werden, dass sie im eingebauten Zustand mit ihren Stirnseiten 40, 43 eine sechste Seite 47 des Gehäuseinnenraums 34 begrenzen. Mit anderen Worten, die Kühlerstirnseite 40 und die Verdampferstirnseite 43 bilden einen Abschnitt des Gehäuses 32 zur Begrenzung des Gehäuseinnenraums 34.

An der ersten Seite 35 des Gehäuseinnenraums 34, die durch einen Bestandteil des Gehäuses 32 gebildet ist, ist ein Ladeluftkanal 48 integral am Gehäuse 32 ausgeformt. Bei einer anderen Ausführungsform kann der Ladeluftkanal 48 auch an einer der anderen Seiten des Gehäuseinnenraums 34 am Gehäuse 32 integral ausgeformt sein. Der Ladeluftkanal 48 verbindet dabei einen Ladelufteinlass 49 des Gehäuses 32, der an die Ladeluftleitung 10 anschließbar ist, mit einem Einlassbereich 50 des Gehäuseinnenraums 34, der an der zweiten Seite 36 des Gehäuseinnenraums 34 ausgebildet ist. Somit führt der Ladeluftkanal 48 von der ersten Seite 35 zur zweiten Seite 36. Gleichzeitig bewirkt der Ladeluftkanal 48 hierbei eine Umlenkung der Ladeluftströmung um etwa 180°.

An der dritten Seite 37 des Gehäuseinnenraums 34, die ebenfalls durch einen Abschnitt des Gehäuses 32 gebildet ist, besitzt das Gehäuse 32 einen integral daran ausgeformten Auslassflansch 51, der für jeden Brennraum 3, der über das Saugmodul 9 mit Ladeluft versorgt werden soll, zumindest einen Auslasskanal 52 aufweist, der jeweils mit einem Auslassbereich 53 des Gehäuseinnenraums 34 fluidisch verbunden ist, der an der dritten Seite 37 ausgebildet ist. Bei einer anderen Ausführungsform kann der Auslassflansch 51 auch an einer der anderen Seiten des Gehäuseinnenraums 34 integral am Gehäuse 32 ausgeform sein.

Der vorstehend genannte Einlassbereich 50 befindet sich innerhalb des Gehäuseinnenraums 34 stromauf des Kühlers 15, während sich der vorstehend genannte Auslassbereich 53 im Gehäuseinnenraum 34 stromab des Verdampfers 16 befindet.

Der Deckel 33 ist gemäß Fig. 5 mit einer Vielzahl von Verschraubungen 54 am Gehäuse 32 befestigbar. Der Verdampfer 16 und der Kühler 15 sind ebenfalls mit einer Vielzahl von Verschraubungen 55 am Gehäuse 32 sowie am Deckel 33 befestigbar. Anstelle der Verschraubungen 54 bzw. 55 sind auch andere geeignete Verbindungstechniken, wie Verkleben und Verschweißen, denkbar. Des Weiteren sind hier mehrere Dichtungen 56 vorgesehen, um den Kühler 15 sowie den Verdichter 16 gegenüber dem Gehäuse 32 bzw. gegenüber dem Deckel 33 abzudichten. Bei per se dichten Verbindungstechniken, wie Verschweißen und Verkleben, können separate Dichtungen auch entfallen.

## Patentansprüche

1. Aufgeladene Brennkraftmaschine, insbesondere in einem Kraftfahrzeug,
- mit einer Frischluftanlage (2) zum Zuführen von Frischluft zu Brennräumen (3) eines Motorblocks (4) der Brennkraftmaschine (1),
- mit einer in der Frischluftanlage (2) angeordneten Ladeeinrichtung (5),
- mit einer wenigstens zweistufigen Ladeluftkühlung (12) zum Kühlen der Frischluft stromab der Ladeeinrichtung (5),
- wobei die Frischluftanlage (2) ein an den Motorblock (4) angeschlossenes und die Frischluft auf die Brennräume (3) verteilendes Saugmodul (9) und eine Ladeluftleitung (10) aufweist, die von der Ladeeinrichtung (5) zum Saugmodul (9) führt,
- wobei eine erste Kühlstufe (13) der Ladeluftkühlung (12) durch einen Kühler (15) gebildet ist,
- wobei eine zweite Kühlstufe (14) der Ladeluftkühlung (12) durch einen Verdampfer (16) eines Kältekreises (17) gebildet ist, in dem ein Kältemittel zirkuliert,
- wobei der Verdampfer (16) im Saugmodul (9) angeordnet ist,
- wobei der Kühler (15) der ersten Kühlstufe (13) in einen Kühlkreis (21) eingebunden ist, in dem ein Kühlmittel zirkuliert,
**dadurch gekennzeichnet,**
- **dass** das Saugmodul (9) einen Gehäuseinnenraum (34) an einer ersten Seite (35), einer zweiten Seite (36), einer dritten Seite (37), einer vierten Seite (38) und an einer fünften Seite (39) von insgesamt sechs Seiten begrenzt,
- **dass** der im Gehäuseinnenraum (34) angeordnete Verdampfer (16) und der jeweilige im Gehäuseinnenraum (34) angeordnete Kühler (15) mit ihren Stirnseiten (40, 43) eine sechste Seite (47) des Gehäuseinnenraums (34) begrenzen,
- **dass** eine Kältemittelanschlüsse (44, 45) aufweisende Verdampferstirnseite (43) des Verdampfers (16) und eine Kühlmittelanschlüsse (41, 42) aufweisende Kühlerstirnseite (40) des jeweiligen Kühlers (15) die sechste Seite (47) des Gehäuseinnenraums (34) begrenzen.

2. Brennkraftmaschine nach Anspruch 1,
**dadurch gekennzeichnet,**
**dass** der Kühler (15) der ersten Kühlstufe (13) stromauf des Verdampfers (16) in der Frischluftanlage (2) angeordnet ist.

3. Brennkraftmaschine nach Anspruch 1 oder 2,
**dadurch gekennzeichnet,**
**dass** der Kühler (15) der ersten Kühlstufe (13) im Saugmodul (9) angeordnet ist.

4. Brennkraftmaschine nach einem der Ansprüche 1 bis 3,
**dadurch gekennzeichnet,**
- **dass** der Kühler (15) der ersten Kühlstufe (13) ein Niedertemperaturkühler eines Niedertemperaturkühlkreises ist, in dem ein Niedertemperaturkühlmittel zirkuliert, oder
- **dass** der Kühler (15) der ersten Kühlstufe (13) ein Hochtemperaturkühler eines Hochtemperaturkühlkreises ist, in dem ein Hochtemperaturkühlmittel zirkuliert.

5. Brennkraftmaschine nach einem der Ansprüche 1 bis 4,
**dadurch gekennzeichnet,**
- **dass** der Kühler (15) der ersten Kühlstufe (13) ein Niedertemperaturkühler eines Niedertemperaturkühlkreises ist, in dem ein Niedertemperaturkühlmittel zirkuliert,
- **dass** die Ladeluftkühlung (12) eine dritte Kühlstufe aufweist, die durch einen Hochtemperaturkühler eines Hochtemperaturkühlkreises gebildet ist, in dem ein Hochtemperaturkühlmittel zirkuliert.

6. Brennkraftmaschine nach Anspruch 5,
**dadurch gekennzeichnet,**
- **dass** der Niedertemperaturkühler im Saugmodul (9) angeordnet ist, oder
- **dass** der Niedertemperaturkühler und der Hochtemperaturkühler im Saugmodul (9) angeordnet sind.

7. Brennkraftmaschine nach einem der Ansprüche 1 bis 6,
**dadurch gekennzeichnet,**
**dass** der Kühler (15) der ersten Kühlstufe (13) oder ein weiterer Kühler einer weiteren Kühlstufe der Ladeluftkühlung (12) unmittelbar mit einem Kühlluftstrom (22) beaufschlagbar ist und in der Ladeluftleitung (10) angeordnet ist.

8. Brennkraftmaschine nach Anspruch 5 oder 6 sowie nach Anspruch 7,
**dadurch gekennzeichnet,**
**dass** der weitere Kühler eine vierte Kühlstufe der Ladeluftkühlung (12) bildet.

9. Brennkraftmaschine nach Anspruch 7 oder 8,
**dadurch gekennzeichnet,**
**dass** ein Kondensator (24) des Kältekreises (17) mit dem Kühlluftstrom (22) beaufschlagbar ist, wobei der jeweilige Kühler (15) und der Kondensator (24) in Reihe im Kühlluftstrom (22) angeordnet sind.

10. Brennkraftmaschine nach einem der Ansprüche 1 bis 9,
**dadurch gekennzeichnet,**
- **dass** der jeweilige Kühlkreis (21) einen mit einem Kühlluftstrom (22) beaufschlagbaren Luftkühler (26) aufweist,
- **dass** der Kältekreis (17) einen mit dem Kühlluftstrom (22) beaufschlagbaren Kondensator (24) aufweist,
- **dass** der jeweilige Luftkühler (26) und der Kondensator (24) im Kühlluftstrom (22) in Reihe angeordnet sind.

11. Brennkraftmaschine nach einem der Ansprüche 1 bis 10,
**dadurch gekennzeichnet,**
- **dass** das Saugmodul (9) ein Gehäuse (32) aufweist, das den Gehäuseinnenraum (34) an der ersten Seite (35), der zweiten Seite (36), der dritten Seite (37) und der vierten Seite (38) begrenzt,
- **dass** das Saugmodul (9) einen Deckel (33) aufweist, der die fünfte Seite (39) des Gehäuseinnenraums (34) begrenzt, wenn er an das Gehäuse (32) angebaut ist.

12. Brennkraftmaschine nach einem der Ansprüche 1 bis 11,
**dadurch gekennzeichnet,**
- **dass** ein Ladeluftkanal (48) integral an einem Gehäuse (32) des Saugmoduls (9) ausgeformt ist, der einen Ladelufteinlass (49) des Gehäuses (32) mit einem an der zweiten Seite (36) des Gehäuseinnenraums (34) ausgebildeten Einlassbereich (50) des Gehäuseinnenraums (34) fluidisch verbindet, und/oder
- **dass** ein Auslassflansch (51) des Saugmoduls (9) integral an einem Gehäuse (32) des Saugmoduls (9) ausgeformt ist, der für wenigstens zwei Brennräume (3) je einen fluidisch mit einem an der dritten Seite (37) des Gehäuseinnenraums (34) ausgebildeten Auslassbereich (53) des Gehäuseinnenraums (34) fluidisch verbundenen Auslasskanal (52) enthält.

13. Saugmodul für eine Frischluftanlage (2) zum Zuführen von Frischluft zu Brennräumen (3) einer Brennkraftmaschine (1), insbesondere in einem Kraftfahrzeug,
- wobei das Saugmodul (9) einen Gehäuseinnenraum (34), in dem ein Verdampfer (16) eines Kältekreises (17) und wenigstens ein Kühler (15) eines Kühlkreises (21) bezüglich einer Ladeluftströmung in Reihe angeordnet sind, an einer ersten Seite (35), einer zweiten Seite (36), einer dritten Seite (37), einer vierten Seite (38) und einer fünften Seite (39) von insgesamt sechs Seiten begrenzt,
- wobei eine Kältemittelanschlüsse (44, 45) aufweisende Verdampferstirnseite (43) des Verdampfers (16) und eine Kühlmittelanschlüsse (41, 42) aufweisende Kühlerstirnseite (40) des jeweiligen Kühlers (15) eine sechste Seite (47) des Gehäuseinnenraums (34) begrenzen.

## Claims

1. Supercharged internal combustion engine, in particular in a motor vehicle,
- with a fresh air system (2) for feeding fresh air to combustion chambers (3) of a motor block (4) of the internal combustion engine (1),
- with a charging device (5) arranged in the fresh air system (2),
- with an at least two-stage charge air cooling (12) to cool the fresh air downstream of the charging device (5),
- whereby the fresh air system (2) has an intake module (9) connected to the motor block (4) and distributing the fresh air to the combustion chambers (3) and a charge air conduit (10) that leads from the charging device (5) to the intake module (9),
- whereby a first cooling stage (13) of the charge air cooling (12) is formed by a cooler (15),
- whereby a second cooling stage (14) of the charge air cooling (12) is formed by an evaporator (16) of a refrigeration circuit (17) in which a refrigerant circulates,
- whereby the evaporator (16) is arranged in the intake module (9),
- whereby the cooler (15) of the first cooling stage (13) is integrated in a cooling circuit (21) in which a coolant circulates,
**characterised in that**
- the intake module (9) delimits a housing interior space (34) on a first side (35), a second side (36), a third side (37), a fourth side (38) and on a fifth side (39) of six sides in total,
- the evaporator (16) arranged in the housing interior space (34) and the respective cooler (15) arranged in the housing interior space (34) delimit with their front sides (40,43) a sixth side (47) of the housing interior space (34),
- an evaporator front side (43) of the evaporator (16) having refrigerant connections (44,45) and a cooler front side (40) of the respective cooler (15) having coolant connections (41,42) delimit the sixth side (47) of the housing interior space (34).

2. Internal combustion engine according to claim 1, **characterised in that** the cooler (15) of the first cooling stage (13) is arranged upstream of the evaporator (16) in the fresh air system (2).

3. Internal combustion engine according to claim 1 or 2, **characterised in that** the cooler (15) of the first cooling stage (13) is arranged in the intake module (9).

4. Internal combustion engine according to one of claims 1 to 3, **characterised in that**
- the cooler (15) of the first cooling stage (13) is a low temperature cooler of a low temperature cooling circuit in which a low temperature coolant circulates, or
- the cooler (15) of the first cooling stage (13) is a high temperature cooler of a high temperature cooling circuit in which a high temperature coolant circulates.

5. Internal combustion engine according to one of claims 1 to 4, **characterised in that**
- the cooler (15) of the first cooling stage (13) is a low temperature cooler of a low temperature cooling circuit in which a low temperature coolant circulates,
- the charge air cooling (12) has a third cooling stage that is formed by a high temperature cooler of a high temperature cooling circuit in which a high temperature coolant circulates.

6. Internal combustion engine according to claim 6, **characterised in that**
- the low temperature cooler is arranged in the intake module (9), or
- the low temperature cooler and the high temperature cooler are arranged in the intake module (9).

7. Internal combustion engine according to one of claims 1 to 6, **characterised in that** the cooler (15) of the first cooling stage (13) or a further cooler of a further cooling stage of the charge air cooling (12) is directly impingeable by a cool air stream (22) and is arranged in the charge air conduit (10).

8. Internal combustion engine according to claim 5 or 6 as well as according to claim 7, **characterised in that** the further cooler forms a fourth cooling stage of the charge air cooling (12).

9. Internal combustion engine according to claim 7 or 8, **characterised in that** a condenser (24) of the refrigeration circuit (17) is impingable by the cool air stream (22), whereby the respective cooler (15) and the condenser (24) are arranged in series in the cool air stream (22).

10. Internal combustion engine according to one of claims 1 to 9, **characterised in that**
- the respective cooling circuit (21) has an air cooler (26) impingeable with a cool air stream (22),
- the refrigeration circuit (17) has a condenser (24) impingeable with a cool air stream (22),
- the respective air cooler (26) and the condenser (24) are arranged in series in the cool air stream (22).

11. Internal combustion engine according to one of claims 1 to 10, **characterised in that**
- the intake module (9) has a housing (32) that delimits the housing interior space (34) on the first side (35), the second side (36), the third side (37) and the fourth side (38),
- the intake module (9) has a lid (33) that delimits the fifth side (39) of the housing interior space (34) when it is mounted on the housing (32).

12. Internal combustion engine according one of claims 1 to 11, **characterised in that**
- a charge air channel (48) is formed integrally on a housing (32) of the intake module (9) and fluidly connects a charge air inlet (49) of the housing (32) with an inlet region (50) of the housing interior space (34) formed on the second side (36) of the housing interior space (34), and/or
- an outlet flange (51) of the inlet module (9) is formed integrally on a housing (32) of the intake module (9) that, for each of at least two combustion chambers (3), contains an outlet channel (52) fluidly connected fluidly with an outlet region (53) of the housing interior space (34) arranged on the third side (37) of the housing interior space (34).

13. Intake module for a fresh air system (2) for feeding fresh air to combustion chambers (3) of an internal combustion engine (1), in particular in a motor vehicle,
- whereby the intake module (9) delimits a housing interior space (34), in which an evaporator (16) of a refrigeration circuit (17) and at least one cooler (15) of a cooling circuit (21) are arranged in series relative to the charge air flow, on a first side (35), a second side (36), a third side (37), a fourth side (38) and on a fifth side (39) of six sides in total,
- whereby an evaporator front side (43) of the evaporator (16) having refrigerant connections (44,45) and a cooler front side (40) of the respective cooler (15) having coolant connections (41,42) delimit a sixth side (47) of the housing interior space (34).

## Revendications

1. Machine à combustion interne suralimentée, en particulier dans un véhicule automobile,
- avec un système d'air frais (2) servant à amener de l'air frais à des chambres de combustion (3) d'un bloc moteur (4) de la machine à combustion interne (1),
- avec un dispositif de charge (5) disposé dans le système d'air frais (2),
- avec un système de refroidissement d'air de charge (12) à deux étages au moins servant à refroidir l'air frais en aval du dispositif de charge (5),
- dans laquelle le système d'air frais (2) présente un module d'aspiration (9) raccordé au bloc moteur (4) et répartissant l'air frais sur les chambres de combustion (3) et un conduit d'air de charge (10), qui mène depuis le dispositif de charge (5) au module d'aspiration (9),
- dans laquelle un premier étage de refroidissement (13) du système de refroidissement d'air de charge (12) est formé par un refroidisseur (15),
- dans laquelle un deuxième étage de refroidissement (14) du système de refroidissement d'air de charge (12) est formé par un évaporateur (16) d'un circuit réfrigérant (17), dans lequel un agent réfrigérant circule,
- dans laquelle l'évaporateur (16) est disposé dans le module d'aspiration (9),
- dans laquelle le refroidisseur (15) du premier étage de refroidissement (13) est intégré dans un circuit de refroidissement (21), dans lequel un agent de refroidissement circule,
**caractérisée en ce**
- **que** le module d'aspiration (9) délimite un espace intérieur de carter (34) au niveau d'un premier côté (35), d'un deuxième côté (36), d'un troisième côté (37), d'un quatrième côté (38) et au niveau d'un cinquième côté (39) parmi six côtés au total,
- **que** l'évaporateur (16) disposé dans l'espace intérieur de carter (34) et le refroidisseur (15) respectif disposé dans l'espace intérieur de carter (34) délimitent par leurs côtés frontaux (40, 43) un sixième côté (47) de l'espace intérieur de carter (34)
- **qu'**un côté frontal d'évaporateur (43), présentant des raccords d'agent réfrigérant (44, 45), de l'évaporateur (16) et un côté frontal de refroidisseur (40), présentant des raccords d'agent de refroidissement (41, 42), du refroidisseur (15) respectif délimitent le sixième côté (47) de l'espace intérieur de carter (34).

2. Machine à combustion interne selon la revendication 1,
**caractérisée en ce**
**que** le refroidisseur (15) du premier étage de refroidissement (13) est disposé en amont de l'évaporateur (16) dans le système d'air frais (2).

3. Machine à combustion interne selon la revendication 1 ou 2,
**caractérisée en ce**
**que** le refroidisseur (15) du premier étage de refroidissement (13) est disposé dans le module d'aspiration (9).

4. Machine à combustion interne selon l'une quelconque des revendications 1 à 3, **caractérisée en ce**
- **que** le refroidisseur (15) du premier étage de refroidissement (13) est un refroidisseur à basse température d'un circuit de refroidissement à basse température, dans lequel un agent de refroidissement à basse température circule, ou
- **que** le refroidisseur (15) du premier étage de refroidissement (13) est un refroidisseur à température élevée d'un circuit de refroidissement à température élevée, dans lequel un agent de refroidissement à température élevée circule.

5. Machine à combustion interne selon l'une quelconque des revendications 1 à 4, **caractérisée en ce**
- **que** le refroidisseur (15) du premier étage de refroidissement (13) est un refroidisseur à basse température d'un circuit de refroidissement à basse température, dans lequel un agent de refroidissement à basse température circule,
- **que** le système de refroidissement d'air de charge (12) présente un troisième étage de refroidissement, qui est formé par un refroidisseur à température élevée d'un circuit de refroidissement à température élevée, dans lequel un agent de refroidissement à température élevée circule.

6. Machine à combustion interne selon la revendication 5,
**caractérisée en ce**
- **que** le refroidisseur à basse température est disposé dans le module d'aspiration (9), ou
- **que** le refroidisseur à basse température et le refroidisseur à température élevée sont disposés dans le module d'aspiration (9).

7. Machine à combustion interne selon l'une quelconque des revendications 1 à 6,
**caractérisée en ce**
**que** le refroidisseur (15) du premier étage de refroidissement (13) ou un autre refroidisseur d'un autre étage de refroidissement du système de refroidissement d'air de charge (12) peut être soumis directement à l'action d'un flux d'air de refroidissement (22) et est disposé dans le conduit d'air de charge (10).

8. Machine à combustion interne selon la revendication 5 ou 6 ainsi que selon la revendication 7,
**caractérisée en ce**
**que** l'autre refroidisseur forme un quatrième étage de refroidissement du système de refroidissement d'air de charge (12).

9. Machine à combustion interne selon la revendication 7 ou 8,
**caractérisée en ce**
**qu'**un condensateur (24) du circuit réfrigérant (17) peut être soumis à l'action d'un flux d'air de refroidissement (22), dans laquelle le refroidisseur (15) respectif et le condensateur (24) sont disposés de manière alignée dans le flux d'air de refroidissement (22).

10. Machine à combustion interne selon l'une quelconque des revendications 1 à 9, **caractérisée en ce**
- **que** le circuit de refroidissement (21) respectif présente un refroidisseur d'air (26) pouvant être soumis à l'action d'un flux d'air de refroidissement (22),
- **que** le circuit réfrigérant (17) présente un condensateur (24) pouvant être soumis à l'action du flux d'air de refroidissement (22),
- **que** le refroidisseur d'air (26) respectif et le condensateur (24) sont disposés de manière alignée dans le flux d'air de refroidissement (22).

11. Machine à combustion interne selon l'une quelconque des revendications 1 à 10, **caractérisée en ce**
- **que** le module d'aspiration (9) présente un carter (32), qui délimite l'espace intérieur de carter (34) au niveau du premier côté (35), du deuxième côté (36), du troisième côté (37) et du quatrième côté (38),
- **que** le module d'aspiration (9) présente un couvercle (33), qui délimite le cinquième côté (39) de l'espace intérieur de carter (34) quand il est installé au niveau du carter (32).

12. Machine à combustion interne selon l'une quelconque des revendications 1 à 11, **caractérisée en ce**
- **qu'**un canal d'air de charge (48) est façonné d'un seul tenant au niveau d'un carter (32) du module d'aspiration (9), lequel relie de manière fluidique une entrée d'air de charge (49) du carter (32) à une zone d'entrée (50), réalisée au niveau du deuxième côté (36) de l'espace intérieur de carter (34), de l'espace intérieur de carter (34), et/ou
- **qu'**une bride de sortie (51) du module d'aspiration (9) est façonnée d'un seul tenant au niveau d'un carter (32) du module d'aspiration (9), laquelle contient pour au moins deux chambres de combustion (3) respectivement un canal de sortie (52) relié de manière fluidique à une zone de sortie (53) réalisée au niveau du troisième côté (37) de l'espace intérieur de carter (34), de l'espace intérieur de carter (34).

13. Module d'aspiration pour un système d'air frais (2) servant à amener de l'air frais à des chambres de combustion (3) d'une machine à combustion interne (1), en particulier dans un véhicule automobile,
- dans lequel le module d'aspiration (9) délimite un espace intérieur de carter (34), dans lequel un évaporateur (16) du circuit réfrigérant (17) et au moins un refroidisseur (15) d'un circuit de refroidissement (21) sont disposés de manière alignée par rapport à l'écoulement d'air de charge, au niveau d'un premier côté (35), d'un deuxième côté (36), d'un troisième côté (37), d'un quatrième côté (38) et d'un cinquième côté (39) parmi six côtés au total,
- dans lequel un côté frontal d'évaporateur (43), présentant des raccords d'agent réfrigérant (44, 45), de l'évaporateur (16) et un côté frontal de refroidisseur (40), présentant des raccords d'agent de refroidissement (41, 42), du refroidisseur (15) respectif délimitent un sixième côté (47) de l'espace intérieur de carter (34).
